# EUROPÄISCHE PATENTANMELDUNG

(11) **EP 1 545 107 A1**
(43) Veröffentlichungstag der Anmeldung: **22.06.2005**
(21) Anmeldenummer: 04030173.1
(22) Anmeldetag: 20.12.2004
(51) Int. Cl.: H04M 3/51, G06F 17/30

(54) **System und Verfahren zur Erfassung eingehender Nachrichten von Fernsehzuschauern oder Radiohörern**

(30) Priorität: 18.12.2003 DE 10359510
(71) Anmelder: Euvia Media AG & Co. KG, 85737 Ismaning (DE)
(72) Erfinder: Albert, Conrad, 81371 München (DE); Fleck, Frederik, 80809 München (DE)
(74) Vertreter: Herrmann, Uwe

(57) **Zusammenfassung**

Die Erfindung betrifft ein System und Verfahren zur Erfassung von eingehenden Nachrichten von Fernsehzuschauern oder Radiohörern mit Mitteln zur Entgegennahme der Nachrichten der Fernsehzuschauer oder Radiohörer sowie mit wenigstens einer mit den Mitteln zur Entgegennahme der Nachrichten in Verbindung stehenden Kunden-Datenbank, in die und/oder aus der die Fernsehzuschauer oder Radiohörer betreffende Daten und/oder die von diesen abgegebenen Nachrichten betreffende Daten einschreibbar und/oder abrufbar sind.

## Beschreibung

Die vorliegende Erfindung betrifft ein System und ein Verfahren zur Erfassung von eingehenden Nachrichten von Fernsehzuschauern oder Radiohörern.

Aus dem Stand der Technik ist es bekannt, Fernsehzuschauern interaktiv Gewinnspiele oder sonstige Inhalte anzubieten, an denen die Zuschauer durch Anrufen einer bundeseinheitlichen Rufnummer teilnehmen können. Da nicht alle anrufenden Zuschauer in eine laufende Sendung weitergeleitet werden können, findet eine Auswahl der Anrufer statt, die von einem Auswählmechanismus vorgenommen wird. Der Mechanismus wählt entweder zu einem beliebigen Zeitpunkt innerhalb eines vorgegebenen Zeitraums eine beliebige stehende Verbindung aus und stellt den entsprechenden Anrufer in die laufende Fernsehsendung ein. Alternativ ist vorgesehen, dass nach Ablauf eines vorgegebenen Zeitraumes eine beliebige Reihenfolge von aufgezeichneten Nachrichten von Zuschauern festgelegt wird, wobei der erste Anrufer in dieser Reihenfolge zurückgerufen und in die Sendung durchgeschaltet wird.

Diesem Auswahlmechanismus können weitere Filter (Vorzählstufe) vorgeschaltet sein, die nur einen Teil der Anrufer dem Auswahlmechanismus zuleiten.

Die Abwicklung der eingehenden Anrufe wird im Regelfall mittels einer IVR-(Interactive-Voice-Response)-Plattform durchgeführt, die aus einem interaktiven Sprachdialogsystem besteht.

Ein Nachteil der genannten Auswahlverfahren besteht darin, dass im wesentlichen nur die Daten der Anrufer erfasst werden, die tatsächlich in die Sendung weitergeleitet werden, wohingegen die Anzahl und Identität des Großteils der Anrufer, die nicht ausgewählt werden, unbekannt bleibt. Diese Anrufer bleiben somit anonym. Ein weiterer Nachteil besteht darin, dass sich die Kontaktaufnahme dieser Anrufe sich nicht nur für den Betreiber, sondern auch für diese Anrufer anonym darstellt, da diese im Regelfall ausschließlich mit einer standardisierten Sprachnachricht des IVR konfrontiert werden.

Der vorliegenden Erfindung liegt die Aufgabe zugrunde, das eingangs genannte System dahingehend weiterzubilden, dass eine verbesserte Reaktion auf das Verhalten der Fernsehzuschauer oder Radiohörer und damit eine bessere Kundenbetreuung ermöglicht wird.

Diese Aufgabe wird durch ein System zur Bearbeitung von eingehenden Nachrichten von Fernsehzuschauern oder Radiohörern gemäß Patentanspruch 1 sowie durch ein Verfahren gemäß Patentanspruch 12 gelöst. Vorteilhafte Ausgestaltungen sind Gegenstand der Unteransprüche.

Das erfindungsgemäße System zur Erfassung von eingehenden Nachrichten von Fernsehzuschauern oder Radiohörern umfasst neben Mitteln zur Entgegennahme der Nachrichten der Zuschauer oder Zuhörer eine mit diesen Mitteln in Verbindung stehende Kunden-Datenbank, in die und/oder aus der die Fernsehzuschauer oder Radiohörer betreffende Daten und/oder die von diesen abgegebenen Nachrichten betreffende Daten einschreibbar und/oder abrufbar sind bzw. in der die genannten Daten abrufbar gespeichert sind. Unter dem Begriff "Nachrichten" sind beliebige Text-, Sprach oder sonstige Nachrichten oder Eingaben, d. h. beliebige Aktionen der teilnehmenden Fernsehzuschauer bzw. Radiohörer zu verstehen.

Die die Fernsehzuschauer oder Radiohörer betreffenden Daten können beliebige Daten der Teilnehmer, wie beispielsweise Alter, Wohnort, Geschlecht, Interessen, Telefonvor- oder -durchwahl etc. umfassen.

Die die Nachrichten betreffenden Daten können beispielsweise Anzahl und Uhrzeit der abgegebenen Nachrichten oder Eingaben umfassen.

Das erfindungsgemäße System weist den Vorteil auf, dass im Bedarfsfall die Daten sämtlicher Teilnehmer bzw. sämtlicher von diesen abgegebenen Nachrichten erfassbar sind und nicht nur der Teilnehmer, die nach dem Passieren eines vorgeschalteten Auswahlverfahrens in eine Sendung weitergeleitet werden, wie dies aus dem Stand der Technik bekannt ist. Auf der Grundlage dieses umfangreichen Datensatzes können Kenntnisse über die Anrufer und deren Anrufverhalten gewonnen und genutzt werden. Beispielsweise ist es möglich, bezogen auf eine bestimmte Sendung oder eine bestimmte Applikation, wie beispielsweise ein Quiz, die Anzahl der Anrufe zu erfassen und auf dieser Grundlage den Erfolg des Programminhaltes bzw. der Applikation zu bemessen. In diesem Fall ist es nicht zwingend erforderlich, jedoch auch nicht ausgeschlossen, dass die Identität der Anrufer festgestellt wird.

Derartige Applikationen können beispielsweise mittels Touch Tone gesteuert werden. Ebenfalls möglich ist der Einsatz eines Spracherkennungssystems, das mit dem Teilnehmer kommuniziert und auf diese Weise den Ablauf der Applikationen steuert.

Die Vorauswahl von Teilnehmern kann beispielsweise auf den Wert "Null" reduziert werden, d. h. es werden in bevorzugter Ausgestaltung der Erfindung sämtliche Teilnehmer erfasst. Der gemäß dem Stand der Technik angewandte Vorzählfaktor ist bei der erfindungsgemäßen Lösung vorzugsweise reduziert oder eliminiert, so dass eine Erfassung aller Teilnehmer und die Erstellung aussagekräftiger Statistiken möglich ist.

Die genannten Daten können in die Kunden-Datenbank eingeschrieben werden und dann beispielsweise für die weitere Programmgestaltung herangezogen werden. In diesem Zusammenhang kann eine Live-Statistik erstellt werden, aus der die Anzahl der Anrufer pro Zeiteinheit (z.B. pro Sekunde) oder seit Sendungsbeginn hervorgeht.

Auch ist es möglich, kundenspezifisch Daten zu erfassen. Denkbar ist es beispielsweise, die Anzahl der Anrufe eines bestimmten Teilnehmers pro Zeiteinheit oder pro Sendung etc. zu erfassen und in der Kunden-Datenbank zu hinterlegen. Überschreitet die Zahl der Anrufe dieses Teilnehmers beispielsweise eine bestimmte Grenze, was durch Abruf der Historie dieses Anrufers aus der Kunden-Datenbank festgestellt werden kann, kann vorgesehen sein, dass diesem Teilnehmer besondere Applikationen, wie beispielsweise die Teilnahme an einem Rätsel, einem Quiz oder an einem Bonusprogramm angeboten werden.

In vorteilhafter Ausgestaltung der Erfindung werden beim Eingang einer Nachricht die die Nachricht und/oder den Teilnehmer betreffende Daten in die Datenbank eingeschrieben und Daten zu dem bisherigen Anrufverhalten ausgelesen und stehen dann sofort für die weitere Abwicklung der Betreuung des Teilnehmers zur Verfügung.

Besonders vorteilhaft ist es, wenn Mittel zur Erfassung der Identität der Fernsehzuschauer oder Radiohörer vorgesehen sind. Ist dies der Fall, können beispielsweise kundenspezifische Applikationen angeboten werden oder Bonusprogramme für besonders treue Teilnehmer aufgelegt werden. Unter dem Begriff der Identität ist nicht zwingend zu verstehen, dass ein Teilnehmer hinsichtlich sämtlicher persönlicher Daten identifizierbar ist. Unter der Identität eines Teilnehmers kann beispielsweise auch nur dessen Rufnummer zu verstehen sein. Ruft beispielsweise ein anhand seiner Rufnummer (CLI) identifizierbarer Teilnehmer häufig an, kann vorgesehen sein, dass diesem Teilnehmer besondere Applikationen, wie Spiele, Quizfragen oder Bonusprogramme angeboten werden oder sonstige Vergünstigungen zukommen.

Als Mittel zur Entgegennahme der Nachrichten kommen beliebige Vorrichtungen und Medien in Frage. Denkbar sind beispielsweise ein interaktives Sprachdialogsystem, ein Internet-Server oder eine Mobilfunkempfangseinheit. Der Fernsehzuschauer oder Radiohörer kann beispielsweise mittels Anruf, Internet oder SMS teilnehmen.

In weiterer Ausgestaltung der Erfindung ist eine Applikationsdatenbank vorgesehen, auf der Applikationen abrufbar gespeichert sind. Die Applikationsdatenbank kann zusätzlich zu der Kunden-Datenbank vorgesehen sein oder einen Bestandteil der Kunden-Datenbank bilden.

Dabei können Steuerungsmittel vorgesehen sein, die aufgrund der Daten der Kunden-Datenbank eine Applikation auswählen. Die Steuerungsmittel können mit den Mitteln zur Erfassung der Identität und/oder mit der Kunden-Datenbank in Verbindung stehen.

Dabei kann vorgesehen sein, dass die Steuerungsmittel mit einem Speicher in Verbindung stehen, in dem Daten der Kunden-Datenbank mit Nutzerprofilen und die Nutzerprofile mit Applikationen korreliert sind.

Auf diese Weise ist es möglich, den teilnehmenden Zuschauern oder Zuhörern eine auf deren Interessen und Bedürfnisse zugeschnittene Applikation anzubieten und dadurch eine verbesserte Kundenbindung zu erzielen. Denkbar ist beispielsweise, dass das Alter des Teilnehmers erfasst wird und auf dieser Grundlage ein typisches Nutzerprofil und darauf basierend eine geeignete Applikation ausgewählt wird.

Weiterhin können Mittel zur Aufzeichnung und Speicherung einer Nachricht eines Fernsehzuschauers oder Radiohörers sowie von damit zusammenhängenden Ereignissen (Stationen und Events) vorgesehen sein. Dabei kann die gesamte Historie eines Anrufes lückenlos in einer Datenbank hinterlegt werden. Dabei kann vorgesehen sein, dass jeder Nachricht, d.h. beispielsweise jedem Anruf eine eindeutige Kennung zugewiesen wird, die diese Nachricht in jeder Phase der Verarbeitung eindeutig identifiziert.

Auf der Grundlage dieser Daten können beispielsweise applikationsspezifische Statistiken erstellt werden, auf deren Grundlage Anweisungen an den Moderator oder Umdisponierungen der Programmplanung vorgenommen werden können. Nach Abruf der Statistikdaten kann somit individuell auf den Interaktionsumfang der Teilnehmer reagiert werden, was dazu führen kann, dass die Programminhalte weitgehend mit den Vorstellungen der Teilnehmer korreliert werden können.

In bevorzugter Ausgestaltung der Erfindung ist eine Statistikeinheit vorgesehen, durch die kundenspezifische und/oder applikationsspezifische Statistiken erstellbar sind. Kundenspezifische Statistiken können beispielsweise erfassen, welche Teilnehmer wann eine Nachricht abgegeben haben, d.h. beispielsweise zu welcher Uhrzeit angerufen haben. Dabei kann z.B. ermittelt werden, welche Altersgruppen bevorzugt zu welcher Uhrzeit teilnehmen und auf dieser Grundlage eine Programmoptimierung vorgenommen werden. Die Statistikeinheit kann auf der Kunden-Datenbank oder auch auf einem anderen Datenbanksystem, beispielsweise auf einer Verwaltungsdatenbank, angeordnet sein

Eine kundenspezifische Statistik kann auch individualisiert sein und beispielsweise Informationen darüber bereitstellen, welcher Kunde sich wann oder wie oft gemeldet hat. Eine derartige Statistik kann genutzt werden, um die Kundenbindung durch eine entsprechende Individualisierung der angebotenen Applikationen zu verbessern.

Applikationsspezifische Statistiken können z.B. erfassen, wie viele Teilnehmer sich bei einer bestimmten Applikation z. B. bei einem bestimmten Quiz gemeldet haben. Auch in diesem Fall ist es möglich, auf der Grundlage dieser Information einen Programmoptimierung vorzunehmen, indem beispielsweise besonders erfolgreiche Applikationen wiederholt oder verlängert werden. Selbstverständlich ist auch eine Kombination beider Statistiken (kundenspezifisch und applikationsspezifisch) und eine darauf basierende Programmoptimierung denkbar.

Besonders vorteilhaft ist es, wenn die Statistiken in Echtzeit erstellt werden, da in diesem Fall basierend auf den Reaktionen der Zuschauer oder Zuhörer unmittelbar Einfluss auf die weitere Programmgestaltung genommen werden kann. Derartige Statistiken können beispielsweise die aktuelle Anruferzahl pro Sekunde, seit Sendungsbeginn oder seit Fragebeginn umfassen. Auch denkbar ist die Erfassung der Anrufzahl eines bestimmten Teilnehmers pro Sendung oder über einen bestimmten Zeitraum. Die Statistik kann auch die Anzeige umfassen, wann der Teilnehmer das letzte Mal erfolgreich war.

Auch die Erstellung von nicht in Echtzeit erstellten Statistiken ist möglich. Derartige Statistiken können beispielsweise die Anzahl der Anrufe pro Zeiteinheit, die Vorwahlen der Teilnehmer oder das Anrufverhalten der Teilnehmer erfassen.

In weiterer Ausgestaltung der Erfindung ist eine von der Kunden-Datenbank getrennte Verwaltungsdatenbank vorgesehen. Diese kann auf die klassischen Anforderungen für Carrier-Services ausgelegt sein.

In weiterer Ausgestaltung der Erfindung ist eine Bonusprogramm-Datenbank vorgesehen, in der Daten von Teilnehmern an einem Bonusprogramm gespeichert sind. Das erfindungsgemäße System ermöglicht es in dieser Ausgestaltung ein Bonusprogramm zu realisieren, dass vorzugsweise den Teilnehmern zugute kommt, die sich in dem Programm entsprechend registriert haben. Eine Funktion der Bonusprogramm-Datenbank ist es, die im Rahmen einer Sendung an einen Teilnehmer vergebenen Bonuspunkte zu verwalten.

Grundsätzlich ist es möglich die Bonusprogramm-Datenbank als separate Datenbank auszuführen. Bevorzugt ist es, wenn die Bonusprogramm-Datenbank als Teil der Kunden-Datenbank ausgeführt ist.

In weiterer Ausgestaltung der Erfindung ist vorgesehen, dass die Bonusprogramm-Datenbank mit den Mitteln zur Entgegennahme der Nachrichten in Verbindung steht. Denkbar ist beispielsweise, dass bestimmte Teilnehmer an dem Bonusprogramm von den Mitteln zur Entgegennahme der Nachrichten an ein Call-Center weitergeleitet werden. Auch ist denkbar, dass von der Bonusprogramm-Datenbank Daten an die Mittel zur Entgegennahme der Nachrichten übersandt werden. Ein Anwendungsbeispiel besteht darin, dass bestimmten Teilnehmern an dem Bonusprogramm bei eingehenden Anrufen ein besonderer Service zuteil wird, beispielsweise eine besondere Begrüßung. Zu diesem Zweck ist es erforderlich, dass von der Bonusprogramm-Datenbank entsprechende Teilnehmerdaten an die Mittel zur Entgegennahme der Nachrichten übertragen werden.

In weiterer Ausgestaltung der Erfindung ist eine mit der Bonusprogramm-Datenbank in Verbindung stehende Serviceeinheit vorgesehen, auf die durch Fernsehzuschauer oder Radiohörer zugreifbar ist und mittels derer Bonuspunkte einlösbar sind. Bei der Serviceinheit kann es sich beispielsweise um eine automatisiert arbeitende Servicedienststelle handeln, die beispielsweise als IVR (Interactice Voice Response) arbeitet. Diese ermöglicht es, ohne Personalaufwand den Teilnehmern Bonuspunkte in Prämien einzulösen. Das Einlösen der Bonuspunkte in Prämien kann über verschiedene Kanäle (z.B. IVR, Web Self Service, Call Center) erfolgen.

Ferner kann eine Datenbank vorgesehen sein, in der Daten darüber gespeichert sind, nach welchen Kriterien Bonuspunkte vergeben werden. In besonders bevorzugter Ausgestaltung der Erfindung kann auf einfache Weise ein Zugriff auf diese Datenbank durch den Systembetreiber erfolgen. Dadurch ist es möglich, die Promotionsregeln, d.h. die Kriterien, nach denen Bonuspunkte vergeben werden, flexibel zu ändern. Denkbar sind z. B. die konstante Regelart, die lineare Regelart, die zeitbasierte Regelart, die frequenzbasierte Regelart, die schwellenwertbasierte Regelart und die aktionsbasierte Regelart. Die konstante Regelart sieht vor, dass Bonuspunkte nach stets konstanten Regeln vergeben werden. Ein Beispiel ist die Vergabe von 30 Bonuspunkten nach jedem 10. Anruf und die Vergabe von 100 Bonuspunkten nach jedem 100. Anruf. Bei der linearen Regelart ist es möglich, einen Bereich zu definieren, für den es Bonuspunkte geben soll. Ein Beispiel ist die Vergabe von 20 Bonuspunkten pro Anruf, wenn der Teilnehmer schon mehr als 10 aber noch weniger als 100 Anrufe getätigt hat. Ab 100 Anrufen erhält der Anrufer für jeden weiteren Anruf 50 Bonuspunkte.

Die zeitbasierte Regelart sieht vor, dass zeitbasierte Regeln zur Anwendung kommen. Ein Beispiel ist, dass zwischen 20:00 und 21:00 Uhr an jedem Tag für jeden Anruf 100 Bonuspunkte vergeben werden. Auf diese Weise ist es möglich, das Anrufverhalten für bestimmte Sendezeiten zu beeinflussen. Die frequenzbasierte Regelart sieht vor, dass für einen bestimmten Zeitraum die Anzahl der Anrufe gesteuert werden kann. Ein Beispiel ist die Vergabe von 5000 Bonuspunkten, falls 10 Anrufe pro Tag innerhalb eines Zeitraumes von zwei Wochen getätigt werden. Die schwellenwertbasierte Regelart sieht vor, dass bei Erreichen einer bestimmten Anzahl von Anrufen eine bestimmte Anzahl von Bonuspunkten vergeben wird. Denkbar ist beispielsweise, dass bei 100 Anrufen pro Tag einmalig 100 Bonuspunkte vergeben werden.

Bei der aktionsbasierten Regelart ist die Vergabe der Bonuspunkte unabhängig von der Anzahl der Anrufe, jedoch abhängig von weiteren Parametern, wie beispielsweise dem Wohnort oder Geburtstag des Anrufers. Beispiele sind, dass jeder Anrufer aus einer bestimmten Stadt oder Anrufer, die Geburtstag haben, einmalig einen bestimmten Betrag von Bonuspunkten erhalten.

Die Erfindung betrifft ferner ein Verfahren zur Bearbeitung von eingehenden Nachrichten von Fernsehzuschauern oder Radiohörern, bei dem Nachrichten der Fernsehzuschauer oder Radiohörer entgegengenommen werden und bei dem die Daten des Fernsehzuschauers oder Radiohörers und/oder die von diesen abgegebenen Nachrichten betreffende Daten in eine Datenbank eingeschrieben oder aus dieser abgerufen werden. Vorteilhafte Ausgestaltungen des Verfahrens sind Gegenstand der Unteransprüche.

Weitere Ausgestaltungen des erfindungsgemäßen Verfahrens sind Gegenstand der weiteren Unteransprüche.

Weitere Einzelheiten und Vorteile der Erfindung werden anhand eines in der Zeichnung dargestellten Ausführungsbeispiels näher erläutert.

Es zeigen:
- Fig. 1:: eine schematische Darstellung einer Ausführungsform der Erfindung und
- Fig. 2:: eine schematische Darstellung einer weiteren Ausführungsform der Erfindung.

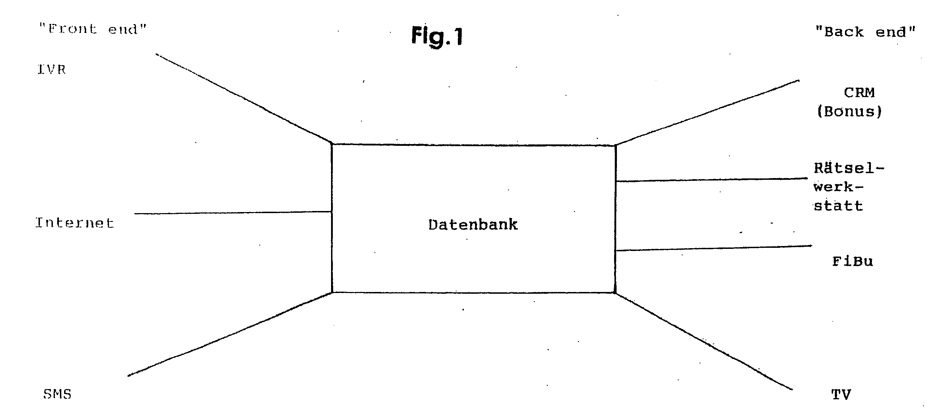

In Fig. 1 sind unter dem Oberbegriff "Front end" exemplarisch die Möglichkeiten dargestellt, mittels derer ein Fernsehzuschauer Zugang zu dem erfindungsgemäßen System erhält. Der Teilnehmer kann beispielsweise mittels eines Anrufes über das IVR (Interactive Voice Response), d.h. mittels eines interaktiven Sprachdialogsystems, per Internet oder per SMS eine Nachricht hinterlassen, die beispielsweise in einem aufgesprochenen Text oder einer schriftlichen Nachricht bestehen kann.

Diese Mittel zur Entgegennahme der Nachrichten der Fernsehzuschauer stehen mit der Datenbank in Verbindung, wie dies aus Fig. 1 hervorgeht. Anstelle der drei dargestellten Optionen kann ebenso vorgesehen sein, dass nur eines der Mittel verfügbar ist, d.h. dass beispielsweise nur über einen Anruf und das IVR eine Teilnahme möglich ist.

Eine auf diese Weise eingegangene Nachricht wird erfasst und deren relevante Daten werden an die Datenbank übermittelt. Dabei kann es sich um die Nachrichten oder die Teilnehmer betreffende Daten handeln. Denkbar ist beispielsweise, dass der Anruf gezählt wird, um die Anzahl der Anrufe pro Zeiteinheit, Sendung etc. zu ermitteln, oder dass die Daten des Teilnehmers, wie beispielsweise dessen Telefonnummer, erfasst werden.

Die Datenbank erlaubt ferner den Lesezugriff, so dass bei oder nach Eingang einer Nachricht Daten aus der Datenbank abgerufen werden können. Denkbar ist beispielsweise die Gesamtzahl der Anrufe oder die Anzahl der Anrufe eines bestimmten Teilnehmers abzufragen. Diese Werte können sodann für die Erstellung von Echtzeitstatistiken oder - aufstellungen verwendet werden. Auf der Grundlage dieser Statistiken oder Aufstellungen ist es möglich, unmittelbar auf den Programmablauf Einfluss zu nehmen.

Denkbar ist ferner, nach der Erfassung der Identität des Anrufers bzw. Teilnehmers dessen "Historie" abzurufen, um prüfen zu können, um welchen Teilnehmer (Name, Alter, Adresse ...) es sich handelt und/oder um feststellen zu können, welches Anrufverhalten dieser Teilnehmer bezogen auf eine Zeiteinheit oder bezogen auf eine Sendung gezeigt hat.

Aufgrund der in der Datenbank enthaltenen Informationen kann Einfluss auf die weitere Behandlung des Teilnehmers oder den weiteren Programmablauf genommen werden. Die in der Datenbank gespeicherten Daten können entsprechend der obigen Ausführungen Einfluss haben auf das CRM (Customer Relationship Management) (z. B. auf das Anbieten spezieller Bonusprogramme), auf das Angebot von speziellen Applikationen, wie z.B. eine Rätselwerkstatt, mittels derer Spiele gesteuert werden, auf die Auswahl und Ausgestaltung von Programminhalten (TV) und werden des Weiteren für die Finanzbuchhaltung (Fibu) benötigt, die in Fig. 1 unter dem Oberbegriff "Back end" zusammengefasst sind.

Die Datenbank besteht aus zwei vollständig voneinander getrennten Datenbanksystemen, was in Fig. 1 nicht näher dargestellt ist.

Bei dem einen Datenbanksystem handelt es sich um ein Carrier Services Datenbanksystem (Verwaltungsdatenbanksystem), das die Aufgaben klassischer Carrier Services übernimmt. Die Carrier Services Datenbank ist in vorteilhafter Weiterbildung der Erfindung im Falle regional verteilter Softswitch-Untereinheiten geographisch redundant an jedem Standort eines regionalen Softswitch vorgesehen. Im Falle regional zentralisierter Softswitch Untereinheiten ist eine lokal redundante Architektur vorgesehen. Für die Kommunikation zwischen den Datenbanken wird zu jedem Standort eine Datenfestverbindung bereitgestellt.

Bei dem anderen Datenbanksystem handelt es sich um die Kunden-Datenbank, die eine Applikationsdatenbank umfasst und auf der Kundendaten, die von den Kunden abgegebenen Nachrichten betreffende Daten sowie die Applikationen betreffende Daten abgelegt sind. Aufgrund der in der Applikationsdatenbank gespeicherten Applikationen ist es möglich, kundenindividuelle Applikationen anzubieten, wobei die Auswahl der Applikation auf der Grundlage der in der Applikationsdatenbank gespeicherten Kundendaten erfolgt.

Die Kapazität der Applikationsdatenbank ist für mindestens 10 Millionen Kunden ausgelegt, wobei von einer Datensatzgröße von mindestens 1 kB pro Kunde ausgegangen wird. Ein typischer Datenbankvorgang auf der Applikationsdatenbank gestaltet sich derart, dass die CLI (calling line identity) des Anrufers ausgelesen wird, der unter der CLI eingetragene Kunde ermittelt wird, zu diesem Kunden gehörende Parameter ausgelesen werden, der IVR-Verlauf auf der Basis der Parameter angesteuert wird und der zu dem Kunden gehörende Parameter während des Anrufes durch eine DTMF-Eingabe des Anrufers verändert wird.

Das Datenbanksystem für applikationsbezogene Daten ist lokal redundant zentral in unmittelbarer Nähe zur zentralen IVR Infrastruktur vorgesehen. Die Datenbankanbindung erfolgt über LAN.

Denkbar ist des Weiteren der Einsatz eines dritten Systems, das für die Erstellung von Echtzeitstatistiken zur Unterstützung der Regie sowie zur Einbindung in den Inhalt des Programms eingesetzt werden kann. Der Einsatz eines derartigen weiteren Systems ist jedoch nur dann sinnvoll, wenn diese Funktionalitäten weder auf der Applikationsdatenbank noch auf der Verwaltungsdatenbank realisierbar sind. Bei ausreichender Kapazität dieser Datenbanksysteme ist somit die Bereitstellung einer weiteren Datenbank nicht zwingend erforderlich.

Allerdings können Backup-Systeme vorgesehen sein, die zumindest wesentliche Teile der Datenbankinhalte als Kopie speichern.

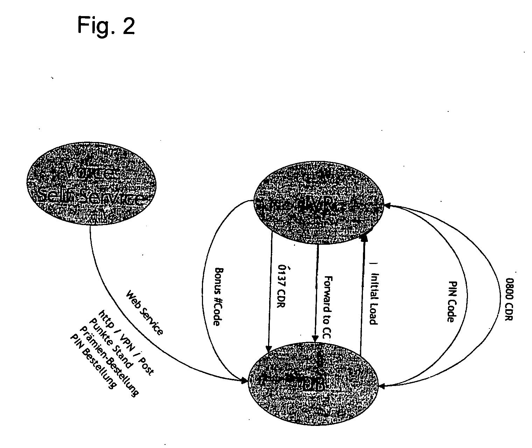

Fig. 2 zeigt eine weitere Ausführungsform des erfindungsgemäßen Systems. Mit dem Bezugszeichen DB ist die Kunden-Datenbank bezeichnet. Das Bezugszeichen IVR (Interactive Voice Response) kennzeichnet eine Ausführungsart der Mittel zur Entgegennahme der Nachrichten. Wie aus Fig. 2 ersichtlich, steht die Kunden-Datenbank mit den Mitteln zur Entgegennahme der Nachrichten in Verbindung. Dabei kennzeichnet der Vermerk "0137 CDR", dass Call Data Records (CDR), die in dem System IVR erfaßt werden, an die Kunden-Datenbank übertragen und dort gespeichert werden.

Der Vermerk "Forward to CC" kennzeichnet die Möglichkeit, dass bestimmte Teilnehmer eines Bonusprogramms, deren Daten im IVR gespeichert sind, in ein Call-Center (CC) weitergeleitet werden. Die Daten der Teilnehmer des Bonusprogramms sind in einer Bonusprogramm-Datenbank abgelegt, die Teil der Kunden-Datenbank ist. Sobald die Weiterleitung erfolgt ist, kann vorgesehen sein, dass in dem entsprechenden Teilnehmer-Datensatz die entsprechende Flag zurückgesetzt wird.

Damit zusätzliche Logik für das Bonusprogramm im IVR durchgeführt werden kann, wenn ein Teilnehmer anruft und teilnimmt, ist es notwendig, die Datenbank der IVR vorzugsweise täglich mit den aktuellen Daten des Bonusprogramms aus der Bonusprogramm-Datenbank zu versorgen bzw. diese zu aktualisieren. Die Datenbank der IVR ist vorzugsweise als Real-Time-Datenbank ausgeführt.

Wie aus Fig. 2 weiter hervorgeht, ist neben den Mitteln zur Entgegennahme der Nachrichten und der Kunden-Datenbank ein weiteres System in Form des "Voice Self Service" vorgesehen. Dieses ermöglicht es den Teilnehmern des Bonusprogramms die gesammelten Punkte in Prämien einzulösen. Das System arbeitet automatisiert. Über dieses System ist dem Kunden möglich, seinen Punktestand abzufragen, Prämien zu bestellen und eine persönliche Identifikationsnummer (PIN) zu erwerben.

Mittels des erfindungsgemäßen Systems und Verfahrens lässt sich der Vorteil erzielen, dass im Gegensatz zu den aus dem Stand der Technik bekannten Systemen zum einen eine bessere Kenntnis der Anrufer bzw. Teilnehmer erreichbar ist. Zum anderen ist die subsequente Steuerung des jeweiligen Programmformates in Abhängigkeit der kurzfristigen Interaktionskraft der Zuschauer / Hörer möglich.

Ein weiterer wesentlicher Vorteil besteht darin, dass bei einer Teilnehmer-Identifikation individualisierte Applikationen realisierbar sind, wodurch die Kunden ebenfalls im Gegensatz zu vorbekannten Systemen individuell betreut werden können und die Kundenbindung dadurch erheblich verbessert werden kann.

## Patentansprüche

1. System zur Erfassung von eingehenden Nachrichten von Fernsehzuschauern oder Radiohörern mit Mitteln zur Entgegennahme der Nachrichten der Fernsehzuschauer oder Radiohörer sowie mit wenigstens einer mit den Mitteln zur Entgegennahme der Nachrichten in Verbindung stehenden Kunden-Datenbank, in die und/oder aus der die Fernsehzuschauer oder Radiohörer betreffende Daten und/oder die von diesen abgegebenen Nachrichten betreffende Daten einschreibbar und/oder abrufbar sind.

2. System nach Anspruch 1, **dadurch gekennzeichnet, dass** die die Nachrichten betreffenden Daten die Anzahl, die Dauer der Nachrichten und den Zeitpunkt der Abgabe der Nachrichten umfassen.

3. System nach Anspruch 1 oder 2, **dadurch gekennzeichnet, dass** die die Fernsehzuschauer oder Radiohörer betreffenden Daten das Alter, die Adresse, das Geschlecht, den Wohnort und die Telefonnummer umfassen.

4. System nach einem der Ansprüche 1 bis 3, **dadurch gekennzeichnet, dass** das System ferner Mittel zur Erfassung der Identität der Fernsehzuschauer oder Radiohörer aufweist.

5. System nach einem der vorhergehenden Ansprüche, **dadurch gekennzeichnet, dass** die Mittel zur Entgegennahme der Nachrichten ein interaktives Sprachdialogsystem, ein Intemet-Server oder eine Mobilfunkempfangseinheit, insbesondere eine Empfangseinheit für SMS-Nachrichten, umfassen.

6. System nach einem der vorhergehenden Ansprüche, **dadurch gekennzeichnet, dass** eine Applikationsdatenbank vorgesehen ist, die zusätzlich zu der Kunden-Datenbank vorgesehen ist oder Bestandteil der Kunden-Datenbank ist, und auf der Applikationen abrufbar gespeichert sind

7. System nach Anspruch 6, **dadurch gekennzeichnet, dass** Steuerungsmittel vorgesehen sind, die aufgrund der in der Kunden-Datenbank abgelegten Daten eine Applikation auswählen.

8. System nach Anspruch 7, **dadurch gekennzeichnet, dass** die Steuerungsmittel mit einem Speicher in Verbindung stehen, in dem Daten der Kunden-Datenbank mit Nutzerprofilen und die Nutzerprofile mit Applikationen korreliert sind.

9. System nach einem der vorhergehenden Ansprüche, **dadurch gekennzeichnet, dass** Mittel zur Aufzeichnung und Speicherung einer Nachricht eines Fernsehzuschauers oder Radiohörers sowie von damit zusammenhängenden Ereignissen vorgesehen sind.

10. System nach einem der vorhergehenden Ansprüche, **dadurch gekennzeichnet, dass** eine Statistikeinheit vorgesehen ist, durch die kundenspezifische und/oder applikationsspezifische Statistiken erstellbar sind.

11. System nach einem der vorhergehenden Ansprüche, **dadurch gekennzeichnet, dass** eine von der Kunden-Datenbank getrennte Verwaltungsdatenbank vorgesehen ist.

12. System nach einem der vorhergehenden Ansprüche, **dadurch gekennzeichnet, dass** eine Bonusprogramm-Datenbank vorgesehen ist, in der Daten von Teilnehmern an einem Bonusprogramm gespeichert sind.

13. System nach Anspruch 12, **dadurch gekennzeichnet, dass** die Bonusprogramm-Datenbank Bestandteil der Kunden-Datenbank ist.

14. System nach einem der Ansprüche 12 oder 13, **dadurch gekennzeichnet, dass** die Bonusprogramm-Datenbank mit den Mitteln zur Entgegennahme der Nachrichten in Verbindung steht.

15. System nach einem der Ansprüche 12 bis 14, **dadurch gekennzeichnet, dass** eine mit der Bonusprogramm-Datenbank in Verbindung stehende Serviceeinheit vorgesehen ist, auf die durch Fernsehzuschauer oder Radiohörer zugreifbar ist und mittels derer Bonuspunkte einlösbar sind.

16. System nach einem der Ansprüche 12 bis 15, **dadurch gekennzeichnet, dass** eine Datenbank vorgesehen ist, in der Daten darüber gespeichert sind, nach welchen Kriterien Bonuspunkte vergeben werden.

17. Verfahren zur Erfassung von eingehenden Nachrichten von Fernsehzuschauern oder Radiohörern, bei dem Nachrichten der Fernsehzuschauer oder Radiohörer entgegengenommen werden und bei dem die Daten des Fernsehzuschauers oder Radiohörers und/oder die von diesen abgegebenen Nachrichten betreffende Daten in eine Datenbank eingeschrieben und/oder aus dieser abgerufen werden.

18. Verfahren nach Anspruch 17, **dadurch gekennzeichnet, dass** die Identität des Fernsehzuschauers oder Radiohörers ermittelt wird.

19. Verfahren nach Anspruch 17 oder 18, **dadurch gekennzeichnet, dass** die Identität der Fernsehzuschauer oder Radiohörer aufgrund der CLI (calling line identity) ermittelt wird.

20. Verfahren nach einem der vorhergehenden Ansprüche, **dadurch gekennzeichnet, dass** aufgrund der in der Kunden-Datenbank abgelegten Daten eine Applikation aus einer Applikationsdatenbank ausgewählt wird.

21. Verfahren nach Anspruch 20, **dadurch gekennzeichnet, dass** aufgrund der Identität der Fernsehzuschauer oder Radiohörer und den zu dieser Identität abgelegten Daten der Kunden-Datenbank ein Nutzerprofil ermittelt wird und dass aufgrund des auf diese Weise ermittelten Nutzerprofils eine Applikation ausgewählt wird.

22. Verfahren nach einem der vorhergehenden Ansprüche, **dadurch gekennzeichnet, dass** in einer Statistikeinheit auf der Grundlage der von den Fernsehzuschauern oder Radiohörern abgegebenen Nachrichten kundenspezifische und/oder applikationsspezifische Statistiken in Echtzeit oder zeitversetzt erstellt werden.

23. Verfahren nach einem der vorhergehenden Ansprüche, **dadurch gekennzeichnet, dass** die Daten wenigstens einiger der Fernsehzuschauer oder Radiohörer in einer Bonusprogramm-Datenbank gespeichert werden.

24. Verfahren nach Anspruch 23, **dadurch gekennzeichnet, dass** Daten von der Bonusprogramm-Datenbank an die Mittel zur Entgegennahme der Nachrichten und/oder in umgekehrter Richtung übermittelt werden.

25. Verfahren nach einem der Ansprüche 23 bis 24, **dadurch gekennzeichnet, dass** das Einlösen von Bonuspunkten der Teilnehmer an einem Bonusprogramm mittels einer mit der Bonusprogramm-Datenbank in Verbindung stehenden Serviceeinheit erfolgt, auf die Fernsehzuschauer oder Radiohörer zugreifen.

26. Verfahren nach einem der Ansprüche 23 bis 25, **dadurch gekennzeichnet, dass** aufgrund von in einer Datenbank abgelegten Kriterien an die Teilnehmer eines Bonusprogramms Bonuspunkte vergeben werden.
